(19)

Europäisches
Patentamt

European
Patent Office

Office européen
des brevets

(11) **EP 4 600 949 A1**

(12) **EUROPEAN PATENT APPLICATION**

(43) Date of publication:
**13.08.2025 Bulletin 2025/33**

(21) Application number: **24223397.1**

(22) Date of filing: **27.12.2024**

(51) International Patent Classification (IPC):
**G10K 15/02** *(2006.01)*

(52) Cooperative Patent Classification (CPC):
**G10K 15/02**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.02.2024 JP 2024017049**

(71) Applicant: **TOYOTA JIDOSHA KABUSHIKI
KAISHA
Aichi-ken, 471-8571 (JP)**

(72) Inventor: **ASAI, Hideo
TOYOTA-SHI, AICHI-KEN, 471-8571 (JP)**

(74) Representative: **Cabinet Beau de Loménie
103, rue de Grenelle
75340 Paris Cedex 07 (FR)**

(54) **VEHICLE MANAGEMENT SYSTEM AND BATTERY ELECTRIC VEHICLE**

(57) A vehicle management system (100) applied to a vehicle (10) is configured to generate a simulated sound that simulates a sound of virtual mobility. The vehicle management system (100) is configured to output the simulated sound through a speaker (70) mounted in the vehicle (10). The vehicle management system (100) is configured to gradually change an output level of the simulated sound over a transition period when turning ON or OFF an output of the simulated sound.

FIG. 5

**EP 4 600 949 A1**

**Description**

BACKGROUND OF THE INVENTION

1. Field of the Invention

The present disclosure relates to a technology for reproducing a sound of virtual mobility in a vehicle.

2. Description of Related Art

Japanese Unexamined Patent Application Publication No. 2011-215437 (JP 2011-215437 A) discloses a sound control device mounted in a vehicle capable of traveling by an electric motor. The sound control device realistically expresses engine sounds generated during shift changes in an engine vehicle.

SUMMARY OF THE INVENTION

When a sound of virtual mobility is reproduced in a vehicle, a sudden change in the sound output through a speaker may cause discomfort for a user of the vehicle.

The present disclosure provides a technology capable of suppressing discomfort of a user when a sound of virtual mobility is reproduced in a vehicle.

A first aspect relates to a vehicle management system applied to a vehicle. The vehicle management system includes one or more processors. The one or more processors are configured to generate a simulated sound that simulates a sound of virtual mobility. The one or more processors are configured to output the simulated sound through a speaker mounted in the vehicle. The one or more processors are configured to gradually change an output level of the simulated sound over a transition period when turning ON or OFF an output of the simulated sound.

In the vehicle management system, in a switching period in which the simulated sound output from the speaker is switched from a first simulated sound to a second simulated sound, the one or more processors may be configured to gradually decrease an output level of the first simulated sound and gradually increase an output level of the second simulated sound.

In the vehicle management system, the switching period may include a first transition period in which the output level of the first simulated sound gradually decreases to zero, and a second transition period in which the output level of the second simulated sound gradually increases from zero.

In the vehicle management system, the first transition period and the second transition period may at least partially overlap.

In the vehicle management system, the first transition period and the second transition period may coincide with each other.

In the vehicle management system, the one or more processors may be configured to gradually change the output level of the first simulated sound and the output level of the second simulated sound such that an output level of a combined sound of the first simulated sound and the second simulated sound is constant over the switching period.

In the vehicle management system, the second transition period may follow the first transition period and not overlap with the first transition period.

In the vehicle management system, the one or more processors may be configured to gradually change the output level of the first simulated sound and the output level of the second simulated sound such that a combined sound of the first simulated sound and the second simulated sound is output from the speaker during at least a part of the switching period.

In the vehicle management system, the one or more processors may be configured to gradually change the output level of the first simulated sound and the output level of the second simulated sound such that an output level of the combined sound is constant over the switching period.

In the vehicle management system, the vehicle may be a battery electric vehicle that uses an electric motor as a power device for traveling. The battery electric vehicle may include a simulation mode in which the virtual mobility is simulated in the vehicle.

In the vehicle management system, the virtual mobility may be an engine vehicle. The simulated sound may be a pseudo engine sound that simulates an engine sound of the engine vehicle.

In the vehicle management system, the virtual mobility may be a manual transmission vehicle. The simulation mode may include a manual mode in which driving characteristics of the manual transmission vehicle are simulated.

In the vehicle management system, the battery electric vehicle may include an accelerator pedal and a sequential shifter. In the manual mode, the battery electric vehicle may be configured to change output characteristics of the electric motor with respect to an operation of the accelerator pedal in response to a shift operation of the sequential shifter.

In the vehicle management system, the battery electric vehicle may include an accelerator pedal, a pseudo clutch pedal, and a pseudo shift device. The pseudo clutch pedal may be configured to operate when the pseudo shift device is operated. In the manual mode, the battery electric vehicle may be configured to change an output of the electric motor with respect to an operation of the accelerator pedal in response to an operation of the pseudo clutch pedal and an operation of the pseudo shift device.

A second aspect relates to a battery electric vehicle that uses an electric motor as a power device for traveling. The battery electric vehicle may include one or more processors. The one or more processors are configured to generate a simulated sound that simulates a sound of virtual mobility. The one or more processors are configured to output the simulated sound through a speaker mounted in the battery electric vehicle. The one or more processors are configured to gradually change an output level of the simulated sound over a transition period when turning ON or OFF an output of the simulated sound.

According to the present disclosure, the simulated sound that simulates the sound of the virtual mobility is generated, and the simulated sound is output through the speaker mounted in the vehicle. When the output of the simulated sound is turned ON or OFF, the output level of the simulated sound gradually changes over the transition period. Since the sound output from the speaker does not suddenly change, the discomfort felt by the user of the vehicle is suppressed.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a conceptual diagram showing a vehicle and a vehicle management system;
FIG. 2 is a conceptual diagram illustrating a simulation mode included in the vehicle management system;
FIG. 3 is a block diagram showing an example of a functional configuration related to the generation and output of a simulated sound of virtual mobility;
FIG. 4 is a block diagram showing another example of the functional configuration related to the generation and output of the simulated sound of the virtual mobility;
FIG. 5 is a timing chart illustrating an example of ON/OFF of the simulated sound;
FIG. 6 is a timing chart illustrating various examples of ON/OFF of the simulated sound;
FIG. 7 is a timing chart illustrating various examples of ON/OFF of the simulated sound;
FIG. 8 is a timing chart illustrating an example of switching of the simulated sound;
FIG. 9 is a timing chart illustrating another example of the switching of the simulated sound;
FIG. 10 is a timing chart illustrating still another example of the switching of the simulated sound;
FIG. 11 is a timing chart illustrating still another example of the switching of the simulated sound;
FIG. 12 is a timing chart illustrating still another example of the switching of the simulated sound;
FIG. 13 is a block diagram illustrating an in-vehicle apparatus and a management server;
FIG. 14 is a block diagram showing a first configuration example of a power control system of a battery electric vehicle;
FIG. 15 is a graph showing each example of an engine model, a clutch model, and a transmission model that constitute an MT vehicle model;
FIG. 16 is a graph showing torque characteristics of an electric motor implemented by motor control using the MT vehicle model; and
FIG. 17 is a block diagram showing a second configuration example of the power control system of the battery electric vehicle.

DETAILED DESCRIPTION OF EMBODIMENTS

Embodiments of the present disclosure will be described with reference to the accompanying drawings.

1. Vehicle and Vehicle Management System

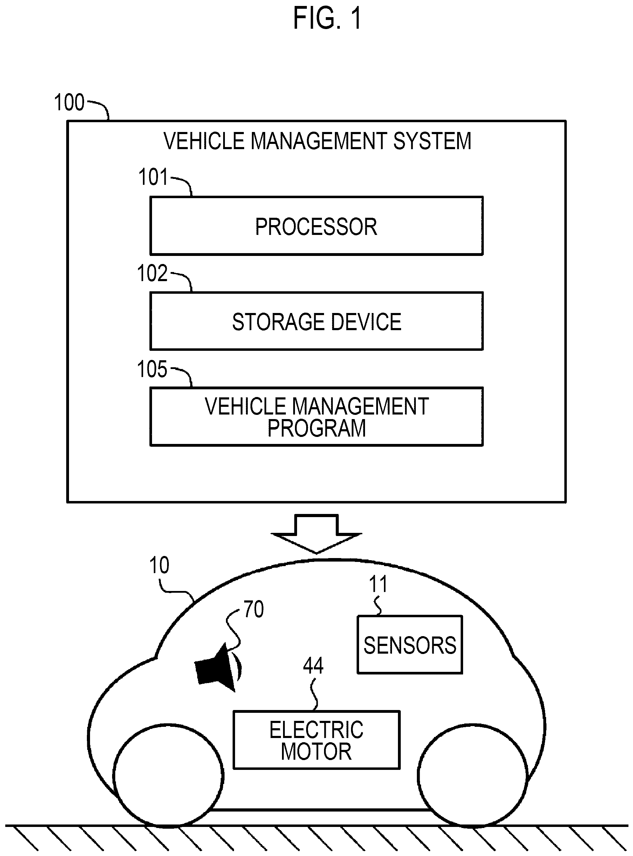

FIG. 1 is a conceptual diagram showing a vehicle 10 and a vehicle management system 100 according to the present embodiment. For example, the vehicle 10 is a battery electric vehicle that uses an electric motor 44 as a power device for traveling. Examples of the electric motor 44 include a brushless direct current motor and a three-phase alternating current synchronous motor. As another example, the vehicle 10 may be an engine vehicle that uses an internal combustion engine as a power device for traveling.

The vehicle 10 includes various sensors 11. The various sensors 11 detect a driving state of the vehicle 10. Examples of the various sensors 11 include an accelerator position sensor, a brake position sensor, a steering angle sensor, a steering torque sensor, a wheel speed sensor, an acceleration sensor, a rotational speed sensor, a position sensor, and a recognition sensor. The accelerator position sensor detects an operation amount of an accelerator pedal. The brake position sensor detects an operation amount of a brake pedal. The steering angle sensor detects a steering angle of a steering wheel. The steering torque sensor detects a steering torque of the steering wheel. The wheel speed sensor detects a rotational speed of a wheel of the vehicle 10. The acceleration sensor detects a lateral acceleration or a longitudinal acceleration of the vehicle 10. The rotational speed sensor detects a rotational speed of the electric motor 44. The position sensor detects a position of the vehicle 10. Examples of the position sensor include a global navigation satellite system (GNSS) sensor. The recognition sensor is a sensor for recognizing (detecting) a situation around the vehicle 10. Examples of the recognition sensor include a camera, light detection and ranging (LIDAR), and a radar.

Further, the vehicle 10 is equipped with one or more speakers 70. For example, the speaker 70 is a vehicle interior speaker that outputs sounds to a vehicle cabin of the vehicle 10. As another example, the speaker 70 may be a vehicle exterior speaker that outputs sounds to the outside of the vehicle 10. The vehicle 10 may include both the vehicle interior speaker and the vehicle exterior speaker.

The vehicle management system 100 is applied to such a vehicle 10 and manages the vehicle 10. The entire vehicle management system 100 may be mounted in the vehicle 10. As another example, at least a part of the vehicle management system 100 may be included in a management server outside the vehicle 10. In that case, the vehicle management system 100 may remotely manage the vehicle 10. As still another example, the vehicle management system 100 may be distributed between the vehicle 10 and the management server.

In general terms, the vehicle management system 100 includes one or more processors 101 (hereinafter, simply referred to as a processor 101) and one or more storage devices 102 (hereinafter, simply referred to as a storage device 102). The processor 101 executes various types of processing. Examples of the processor 101 include a general-purpose processor, a specific-purpose processor, a central processing unit (CPU), a graphics processing unit (GPU), an application specific integrated circuit (ASIC), a field-programmable gate array (FPGA), an integrated circuit, a conventional circuit, and/or a combination thereof. The processor 101 can also be referred to as circuitry or processing circuitry. The circuitry is hardware programmed to implement functions described or hardware that executes the functions. The storage device 102 stores (retains) various types of information. Examples of the storage device 102 include a volatile memory, a non-volatile memory, a hard disk drive (HDD), and a solid state drive (SSD). The functions of the vehicle management system 100 are implemented by the collaboration between the processor 101 and the storage device 102.

One or more vehicle management programs 105 (hereinafter, simply referred to as a vehicle management program 105) are computer programs executed by the processor 101. The functions of the vehicle management system 100 may be implemented by the collaboration between the processor 101 that executes the vehicle management program 105 and the storage device 102. The vehicle management program 105 is retained in the storage device 102. Alternatively, the vehicle management program 105 may be recorded on a computer-readable recording medium.

2. Simulation Mode in Which Virtual Mobility Is Simulated

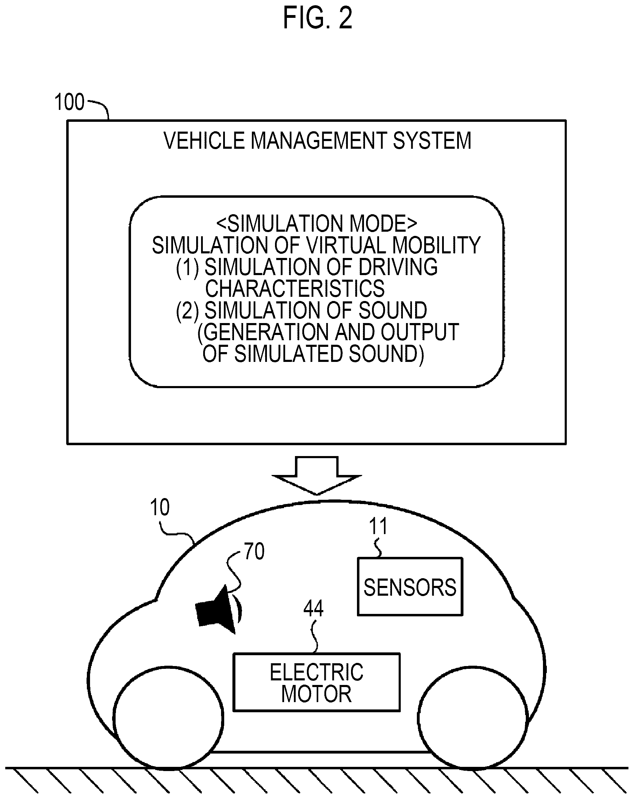

FIG. 2 is a conceptual diagram illustrating a "simulation mode" included in the vehicle management system 100 according to the present embodiment. The simulation mode is a mode in which "virtual mobility" is simulated (reproduced) in the vehicle 10. For example, the virtual mobility that is a simulation target is a type of vehicle different from the vehicle 10. As another example, the virtual mobility that is the simulation target may be a train, an airplane, or the like.

For example, in a case where the vehicle 10 is a battery electric vehicle, the vehicle management system 100 may simulate (reproduce) "driving characteristics" of another vehicle in the battery electric vehicle. The other vehicle (virtual mobility) that is the simulation target may be another battery electric vehicle or may be a manual transmission vehicle (MT vehicle). For example, the vehicle management system 100 may simulate (reproduce) driving characteristics of the MT vehicle in the battery electric vehicle. Details of the "MT mode (manual mode)" in which the driving characteristics of the MT vehicle are simulated in the battery electric vehicle will be described in Section 6 below. In any case, the vehicle management system 100 manages virtual mobility model data indicating a model of the virtual mobility and reproduces the driving characteristics of the virtual mobility based on the virtual mobility model data. Consequently, a driver of the vehicle 10 can feel as though the driver is driving the virtual mobility.

The virtual mobility to be simulated can also be switched. Specifically, a plurality of types of virtual mobility model data regarding a plurality of types of virtual mobility is prepared. A user of the vehicle 10 designates the preferred virtual mobility, and the vehicle management system 100 reproduces the driving characteristics by using the virtual mobility model data regarding the virtual mobility designated by the user. Consequently, the driver of the vehicle 10 can feel as though the driver is driving the driver's preferred virtual mobility.

As another example, the vehicle management system 100 may simulate (reproduce) a "sound" of the virtual mobility in the vehicle 10. That is, the vehicle management system 100 may generate a simulated sound that simulates the sound of the virtual mobility and output the simulated sound through the speaker 70 of the vehicle 10. Typically, the sound to be simulated (reproduced) is a driving sound or a traveling sound of the virtual mobility. The virtual mobility that is the simulation target is, for example, a vehicle. The vehicle that is the simulation target may be an engine vehicle or may be a battery electric vehicle. For example, in a case where the vehicle 10 is a battery electric vehicle and the virtual mobility is an engine vehicle, the vehicle management system 100 simulates (reproduces) an engine sound of the engine vehicle in the battery electric vehicle. The virtual mobility that is the simulation target is not limited to the vehicle and may be a train, an airplane, or the like.

Hereinafter, the generation and output of the simulated sound that simulates the sound of the virtual mobility will be described in more detail. In the following description, as an example, a pseudo engine sound that simulates the engine sound of the engine vehicle will be considered. Note that the present disclosure can be similarly applied to other sounds. In a case of generalization, the "pseudo engine sound" in the following description is replaced with the "simulated sound".

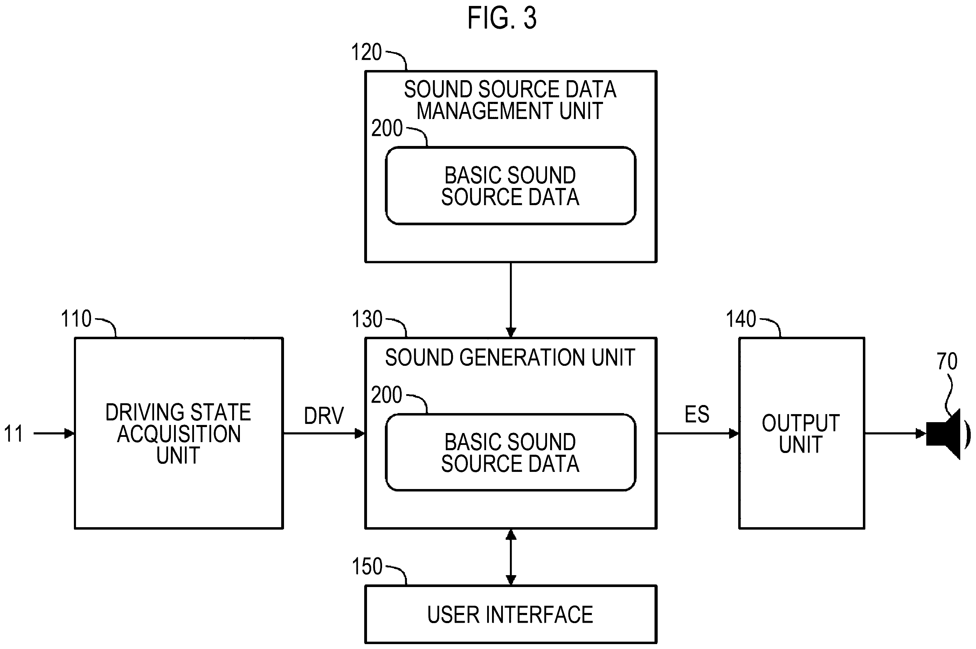

FIG. 3 is a block diagram showing an example of a functional configuration related to the generation and output of the simulated sound of the virtual mobility. The vehicle management system 100 includes a driving state acquisition unit 110, a sound source data management unit 120, a sound generation unit 130, and an output unit 140 as functional blocks. The functional blocks may be implemented, for example, by the collaboration between the processor 101 that executes the vehicle management program 105 and the storage device 102.

The driving state acquisition unit 110 acquires driving state information DRV indicating the driving state of the vehicle 10. The driving state information DRV includes information regarding a driving operation by the driver, information regarding a traveling state of the vehicle 10, information regarding a situation around the vehicle 10, and the like. Typically, the driving state information DRV includes information detected by the sensors 11 mounted in the vehicle 10. For example, the driving state information DRV includes the operation amount of the accelerator pedal (accelerator operation amount), the operation amount of the brake pedal (brake operation amount), the steering angle, the steering speed, the steering torque, the wheel speed, the vehicle speed, the longitudinal acceleration, the lateral acceleration, and the rotational speed of the electric motor 44. The driving state information DRV may include the position of the vehicle 10. The driving state information DRV may include a situation around the vehicle 10 recognized (detected) by the recognition sensor.

In addition, the driving state information DRV includes a virtual engine rotational speed Ne. Here, it is assumed that the vehicle 10 uses a virtual engine as the power device for traveling. The virtual engine rotational speed Ne is a rotational speed of the virtual engine when it is assumed that the vehicle 10 is driven by the virtual engine. For example, the driving state acquisition unit 110 may calculate the virtual engine rotational speed Ne to increase as the wheel speed increases. Additionally, in a case where the vehicle 10 includes the manual mode (MT mode) to be described below, the driving state acquisition unit 110 may calculate the virtual engine rotational speed Ne in the manual mode based on the wheel speed, the overall reduction ratio, and the slip rate of a virtual clutch. Details of a method of calculating the virtual engine rotational speed Ne in the manual mode will be described below.

The sound source data management unit 120 stores and manages basic sound source data 200 to be used to generate the pseudo engine sound. The sound source data management unit 120 is mainly implemented by the one or more storage devices 102. Typically, the basic sound source data 200 includes a plurality of types of sound source data. The types of sound source data include, for example, sound source data of a sound caused by engine combustion (for low revolutions per minute, for medium revolutions per minute, and for high revolutions per minute), sound source data of a sound caused by a drive system, such as a gear (for low revolutions per minute, for medium revolutions per minute, and for high revolutions per minute), sound source data of a noise sound, and sound source data of an event sound (for example, a grinding sound and an engine stalling sound). Each sound source data is generated in advance through a simulation based on an engine model and a vehicle model of the engine vehicle, and the like. Each sound source data can be flexibly adjusted. That is, at least one of the sound pressure and the frequency of the sound indicated by the sound source data can be flexibly adjusted.

The sound generation unit 130 (sound simulator) is a simulator that generates the pseudo engine sound. The sound generation unit 130 acquires at least a part of the driving state information DRV from the driving state acquisition unit 110. In particular, the sound generation unit 130 acquires information on the virtual engine rotational speed Ne or the vehicle speed from the driving state acquisition unit 110. In addition, the sound generation unit 130 reads the basic sound source data 200 from the sound source data management unit 120. Then, the sound generation unit 130 generates the pseudo engine sound corresponding to the driving state (the virtual engine rotational speed Ne or the vehicle speed) of the vehicle 10 by combining one or more pieces of sound source data included in the basic sound source data 200. Engine sound data ES is data indicating the generated pseudo engine sound.

The generation of the pseudo engine sound is a well-known technology and is not particularly limited in the present embodiment. For example, the pseudo engine sound may be generated by a well-known engine sound simulator employed in a game or the like. A method may be employed in which a map of the virtual engine rotational speed Ne to the frequency and a map of the virtual engine torque to the sound pressure are prepared, the frequency of the pseudo engine sound is increased or decreased in proportion to the virtual engine rotational speed Ne, and the sound pressure is increased or decreased in proportion to the virtual engine torque.

The output unit 140 receives the engine sound data ES generated by the sound generation unit 130. The output unit 140 outputs the pseudo engine sound through the speaker 70 based on the engine sound data ES. Consequently, the driver of the vehicle 10 can feel as though the driver is driving the virtual mobility.

The vehicle management system 100 may further include a user interface 150. The user interface 150 includes an input device and a display device. Examples of the input device include a touch panel, a switch, and a button. Examples of the display device include a display and a touch panel. The user (for example, a driver or a passenger) of the vehicle 10 can turn ON/OFF the generation and output of the pseudo engine sound by using the user interface 150.

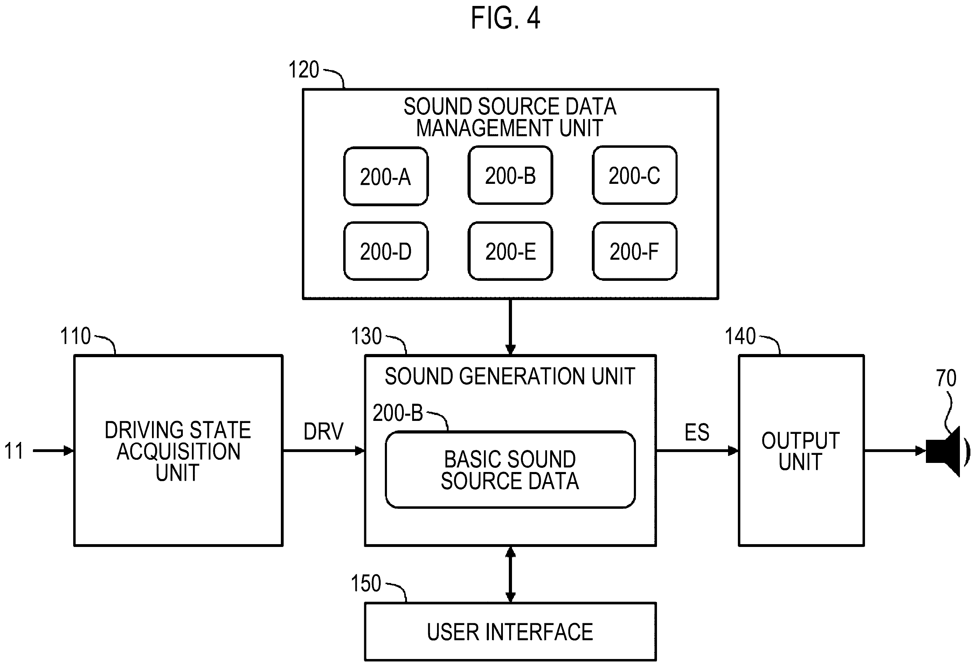

FIG. 4 is a block diagram showing another example of the functional configuration related to the generation and output of the simulated sound of the virtual mobility. In the example shown in FIG. 4, the sound source data management unit 120 stores and manages a plurality of types of basic sound source data 200 (200-A, 200-B, 200-C, ... ) respectively corresponding to a plurality of types of virtual mobility (A, B, C, ... ). That is, the sound source data management unit 120 stores and manages the basic sound source data 200 for each virtual mobility. Each basic sound source data 200 is generated in advance based on the engine model or the vehicle model of the corresponding virtual mobility.

The user of the vehicle 10 can designate the simulation target from among the types of virtual mobility. Specifically, the sound source data management unit 120 or the sound generation unit 130 presents the types of virtual mobility to the user through the user interface 150 (display device). The user designates one of the types of virtual mobility by using the user interface 150 (input device). The sound generation unit 130 acquires one of the types of basic sound source data 200 corresponding to the virtual mobility designated by the user from the sound source data management unit 120. Then, the sound generation unit 130 generates the pseudo engine sound by using the acquired basic sound source data 200 (for example, the basic sound source data 200-B corresponding to the virtual mobility B). Consequently, the driver of the vehicle 10 can feel as though the driver is driving the driver's preferred virtual mobility. In addition, the user of the vehicle 10 can also switch the pseudo engine sound output from the speaker 70 by using the user interface 150.

3. ON/OFF of Simulated Sound

As described above, the sound of the virtual mobility can be reproduced in the vehicle 10. Specifically, the simulated sound that simulates the sound of the virtual mobility is generated, and the simulated sound is output through the speaker 70 of the vehicle 10. The output of the simulated sound can be switched between ON and OFF by the user of the vehicle 10. However, in a case where the sound output through the speaker 70 suddenly changes, the user of the vehicle 10 may feel discomfort. For example, when the output of the simulated sound is turned ON, the user of the vehicle 10 (for example, the driver or the passenger) may be startled or feel stress when a loud simulated sound is suddenly output from the speaker 70.

Therefore, according to the present embodiment, the vehicle management system 100 gradually changes an output level of the simulated sound when turning ON or OFF the output of the simulated sound from the speaker 70. Here, the output level means at least one of the volume and the sound pressure. Since the sound output from the speaker 70 does not suddenly change, the discomfort felt by the user of the vehicle 10 is suppressed.

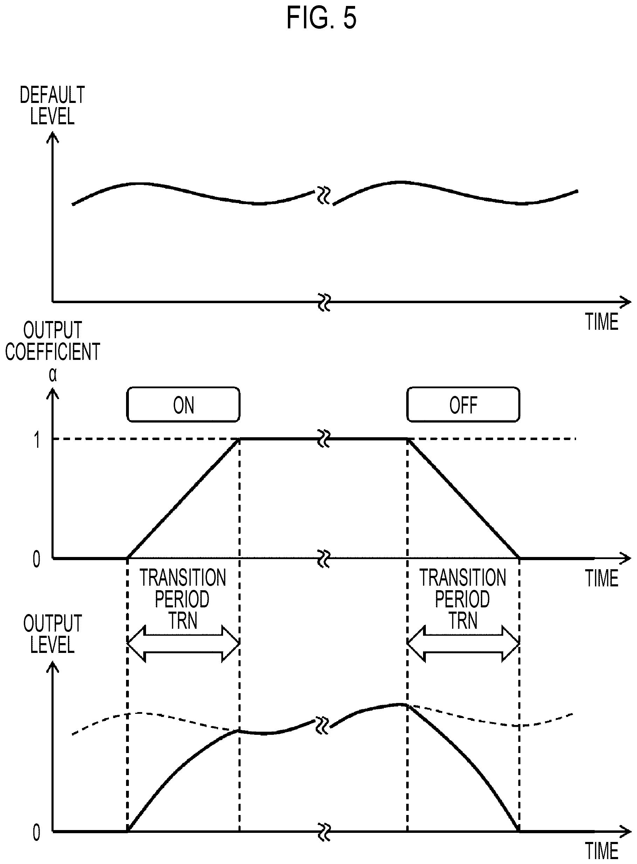

FIG. 5 is a timing chart illustrating an example of the ON/OFF of the simulated sound. The sound generation unit 130 generates the simulated sound. The level of the simulated sound that is generated initially is referred to as a default level for convenience. Further, the sound generation unit 130 corrects the simulated sound by multiplying the default level of the simulated sound by an output coefficient $\alpha$. The level of the simulated sound after correction is the output level. In a case where the output coefficient $\alpha$ is 1, the output level coincides with the default level. In a case where the output coefficient $\alpha$ is less than 1, the output level is lower than the default level. The sound generation unit 130 sends the simulated sound after correction to the output unit 140. The output unit 140 outputs the simulated sound after correction through the speaker 70.

In a state in which the output of the simulated sound is turned OFF, the sound generation unit 130 sets the output coefficient $\alpha$ to zero. When the user of the vehicle 10 switches the output of the simulated sound to ON, the sound generation unit 130 gradually increases the output coefficient $\alpha$ from zero to 1. A transition period TRN is a period in which the output coefficient $\alpha$ gradually changes. The transition period TRN is, for example, a predetermined period and is set by a system designer. By gradually increasing the output coefficient $\alpha$, the output level of the simulated sound output from the speaker 70 gradually increases from zero to the default level (100%) over the transition period TRN. Additionally, when the user of the vehicle 10 switches the output of the simulated sound to OFF, the sound generation unit 130 gradually decreases the output coefficient $\alpha$ from 1 to zero. By gradually decreasing the output coefficient $\alpha$, the output level of the simulated sound output from the speaker 70 gradually decreases from the default level (100%) to zero over the transition period TRN.

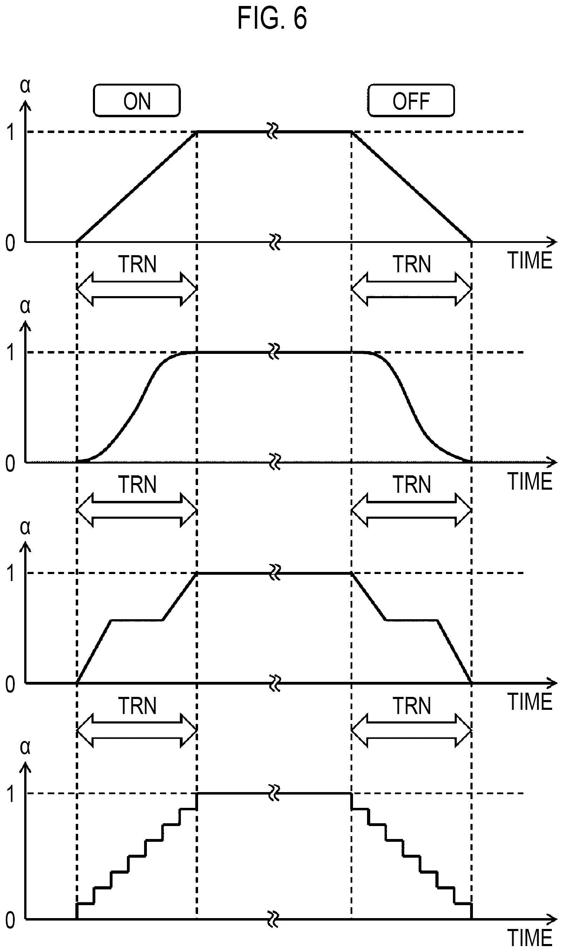

FIG. 6 shows various examples of changes (transitions) of the output coefficient $\alpha$ in the transition period TRN. The output coefficient $\alpha$ may change linearly or may be converted nonlinearly. The output coefficient $\alpha$ may change monotonically or may change in a stepwise manner. In a part of the transition period TRN, the output coefficient $\alpha$ may be constant.

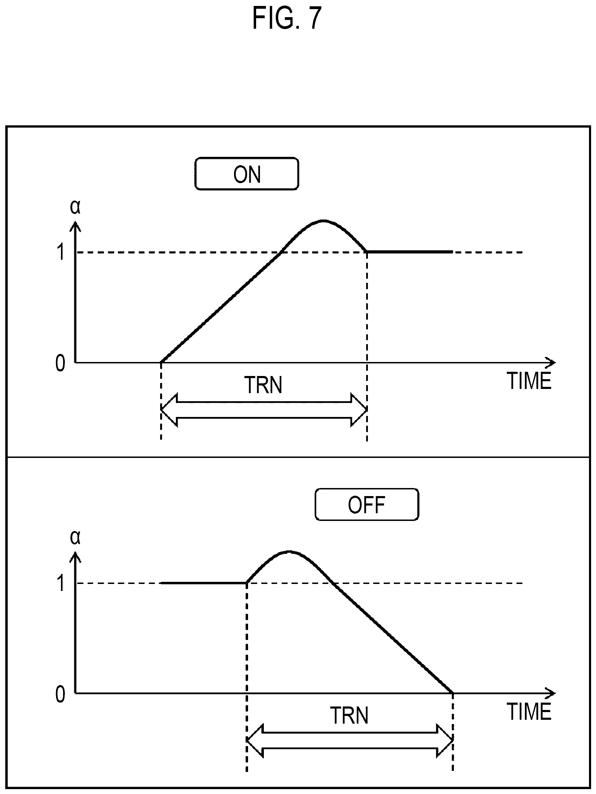

FIG. 7 shows still another example of the changes (transitions) of the output coefficient $\alpha$ in the transition period TRN. The output coefficient $\alpha$ may temporarily exceed 1. For example, when the simulated sound is turned ON, the output coefficient $\alpha$ may increase from zero, once exceed 1, and then return to 1 (overshoot). As another example, when the simulated sound is turned OFF, the output coefficient $\alpha$ may once exceed 1 and then decrease toward zero.

As described above, according to the present embodiment, the vehicle management system 100 gradually changes the output level of the simulated sound over the transition period TRN when turning ON or OFF the output of the simulated sound. As a result, the sound output from the speaker 70 does not suddenly change, so that the discomfort felt by the user of the vehicle 10 is suppressed.

4. Switching of Simulated Sound

The user of the vehicle 10 can also switch the simulated sound output from the speaker 70 by using the user interface 150. In the following description, the simulated sound before the switching will be referred to as a "first simulated sound S1", and the simulated sound after the switching will be referred to as a "second simulated sound S2". A "switching period SW" is a period in which the simulated sound output from the speaker 70 is switched from the first simulated sound S1 to the second simulated sound S2. In the switching period SW, the first simulated sound S1 is turned OFF, and the second simulated sound S2 is turned ON instead. In this case, the simulated sound is turned ON/OFF in the same manner as in the case of Section 3. That is, the vehicle management system 100 gradually decreases the output level of the first simulated sound S1 over a first transition period TRN1 and gradually increases the output level of the second simulated sound S2 over a second transition period TRN2. As a result, the sound output from the speaker 70 does not suddenly change, so that the discomfort felt by the user of the vehicle 10 is suppressed.

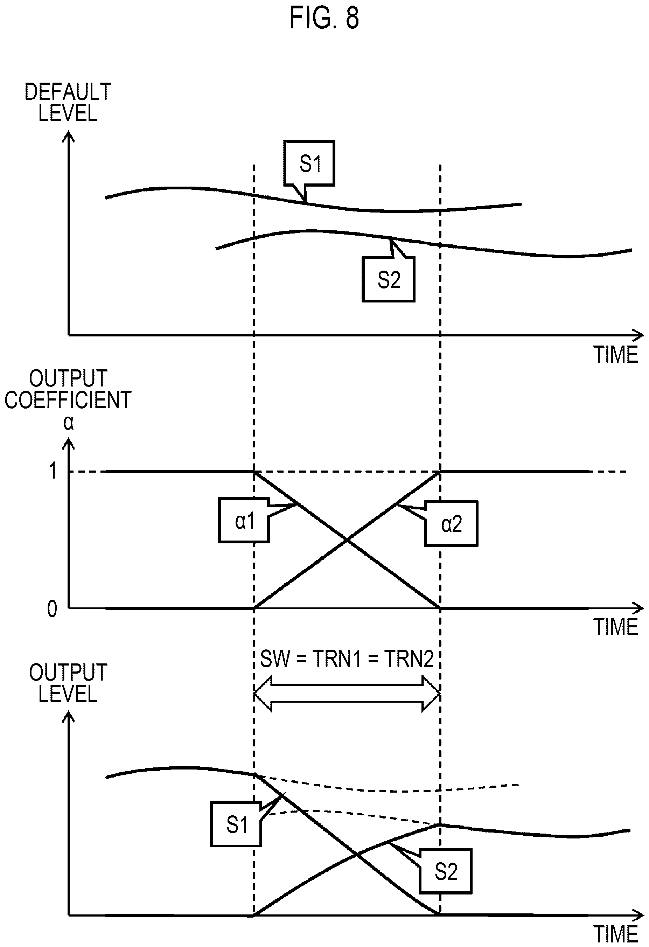

FIG. 8 is a timing chart illustrating an example of the switching of the simulated sound. Before the switching period SW, the sound generation unit 130 generates at least the first simulated sound S1. The sound generation unit 130 corrects the first simulated sound S 1 by multiplying the default level of the first simulated sound S 1 by a first output coefficient $\alpha 1$. Before the switching period SW, the sound generation unit 130 sets the first output coefficient $\alpha 1$ to 1. In the first transition period TRN1 that is at least a part of the switching period SW, the sound generation unit 130 gradually decreases the first output coefficient $\alpha 1$ from 1 to zero. By gradually decreasing the first output coefficient al, the output level of the first simulated sound S1 gradually decreases from the default level (100%) to zero over the first transition period TRN1.

In addition, at least after the start of the switching period SW, the sound generation unit 130 generates the second simulated sound S2. The sound generation unit 130 corrects the second simulated sound S2 by multiplying the default level of the second simulated sound S2 by a second output coefficient $\alpha 2$. Before the switching period SW, the sound generation unit 130 sets the second output coefficient $\alpha 2$ to zero. In the second transition period TRN2 that is at least a part of the switching period SW, the sound generation unit 130 gradually increases the second output coefficient $\alpha 2$ from zero to 1. By gradually increasing the second output coefficient $\alpha 2$, the output level of the second simulated sound S2 gradually increases from zero to the default level (100%) over the second transition period TRN2.

In the example shown in FIG. 8, the first transition period TRN1 and the second transition period TRN2 overlap. More specifically, the first transition period TRN1 and the second transition period TRN2 coincide with each other, and as a result, also coincide with the switching period SW. In the switching period SW, the sound generation unit 130 generates a combined sound by combining the first simulated sound S1 after correction and the second simulated sound S2 after correction. The sound generation unit 130 sends the generated combined sound to the output unit 140. The output unit 140 outputs the combined sound through the speaker 70. The user of the vehicle 10 can enjoy the combined sound of the first simulated sound S1 and the second simulated sound S2 in the switching period SW. Additionally, the combined sound of the first simulated sound S1 and the second simulated sound S2 also has an effect of enhancing the user's excitement in vehicle 10.

The sound generation unit 130 may gradually change the output level of the first simulated sound S1 and the output level of the second simulated sound S2 such that the output level of the combined sound of the first simulated sound S1 and the second simulated sound S2 is constant over the switching period SW. Consequently, the switching of the simulated sound is performed more smoothly.

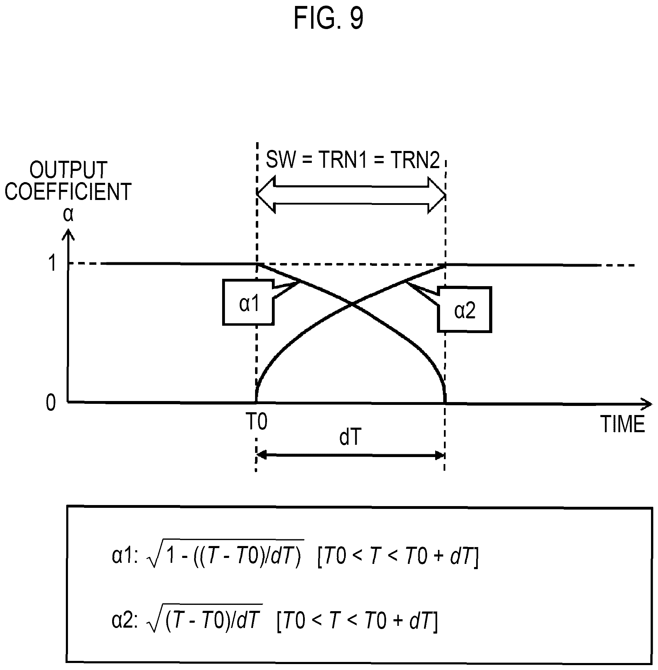

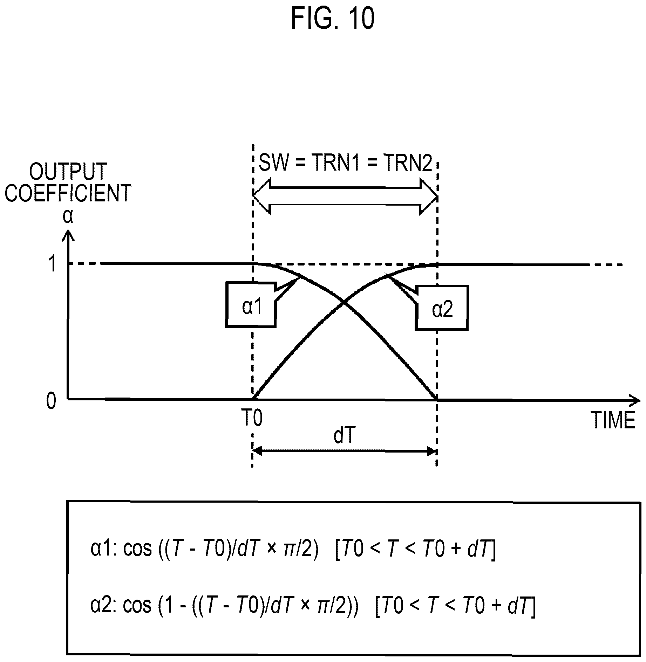

FIGS. 9 and 10 show examples of the first output coefficient $\alpha 1$ and the second output coefficient $\alpha 2$ to be used to make the output level of the combined sound constant over the switching period SW. Human hearing perception is logarithmic with respect to the volume (sound pressure). In consideration of this, in the example shown in FIG. 9, square root functions are used as the first output coefficient $\alpha 1$ and the second output coefficient $\alpha 2$. In the example shown in FIG. 10, trigonometric functions are used as the first output coefficient $\alpha 1$ and the second output coefficient $\alpha 2$. In the formulas shown in FIGS. 9 and 10, T is time, T0 is a start timing of the switching period SW, and dT is a duration of the switching period SW.

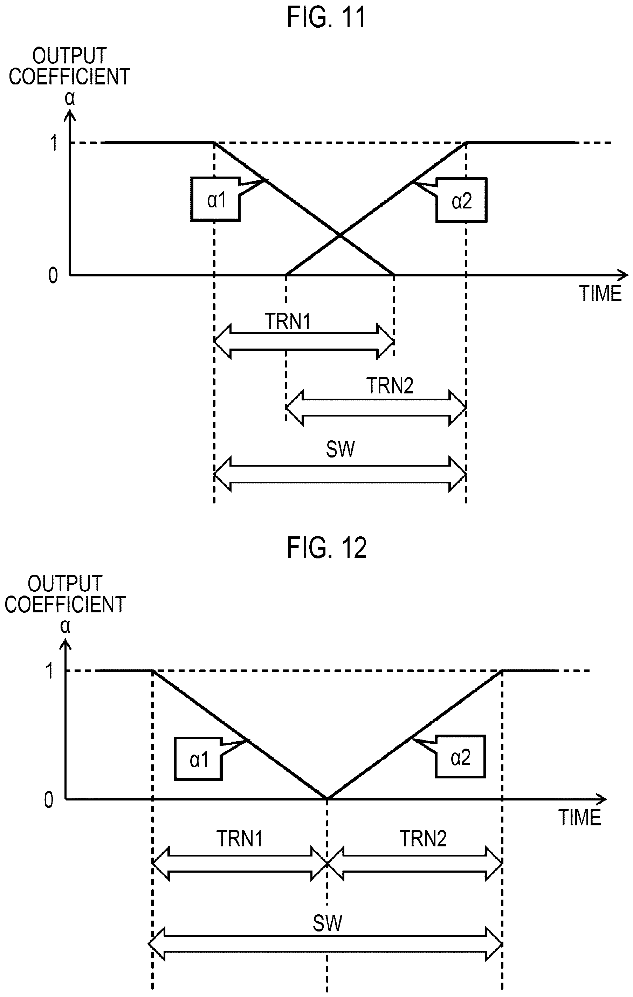

FIG. 11 is a timing chart illustrating still another example of the switching of the simulated sound. In the example shown in FIG. 11, the first transition period TRN1 and the second transition period TRN2 partially overlap. Even in this case, the sound output from the speaker 70 does not suddenly change, so that the discomfort felt by the user of the vehicle 10 is suppressed. In addition, in a part of the switching period SW, the combined sound of the first simulated sound S1 and the second simulated sound S2 is output from the speaker 70.

FIG. 12 is a timing chart illustrating still another example of the switching of the simulated sound. In the example shown in FIG. 12, the first transition period TRN1 and the second transition period TRN2 do not overlap. The second transition period TRN2 follows the first transition period TRN1. Even in this case, the sound output from the speaker 70 does not suddenly change, so that the discomfort felt by the user of the vehicle 10 is suppressed.

Further, the change patterns of the output coefficient $\alpha$ as shown in FIG. 6 or 7 can also be applied to the first output coefficient α1 and the second output coefficient α2.

5. Various Aspects of Operation

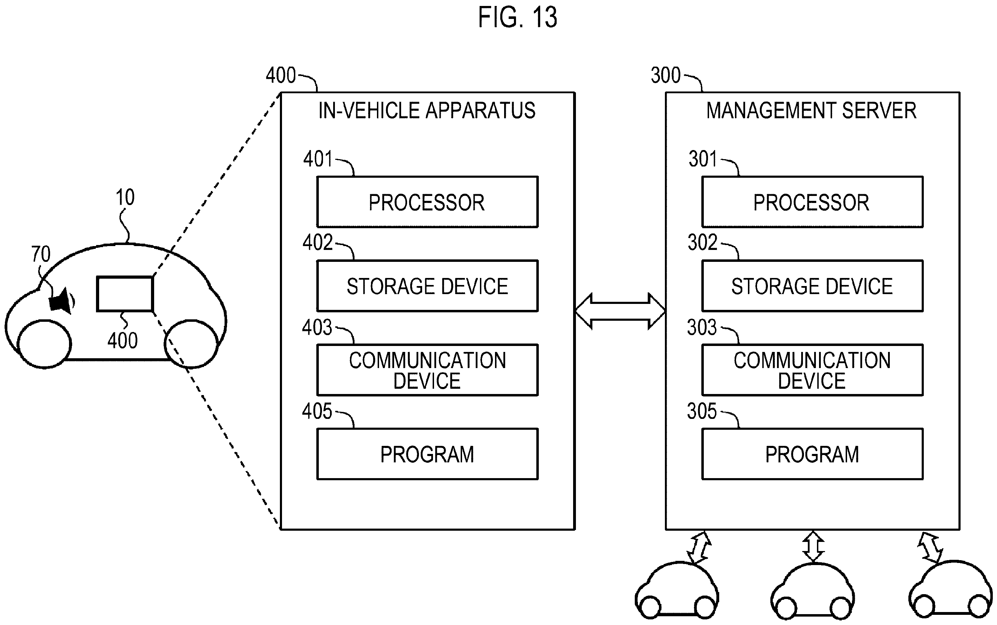

FIG. 13 is a block diagram illustrating an in-vehicle apparatus 400 and a management server 300 that constitute the vehicle management system 100. The in-vehicle apparatus 400 and the management server 300 can communicate with each other via a communication network.

The in-vehicle apparatus 400 is mounted in the vehicle 10. The in-vehicle apparatus 400 includes one or more processors 401 (hereinafter, simply referred to as a processor 401), one or more storage devices 402 (hereinafter, simply referred to as a storage device 402), and a communication device 403. The processor 401 executes various types of processing. Examples of the processor 401 include a general-purpose processor, a specific-purpose processor, a CPU, a GPU, an ASIC, an FPGA, an integrated circuit, a conventional circuit, and/or a combination thereof. The processor 401 can also be referred to as circuitry or processing circuitry. The storage device 402 stores (retains) various types of information. Examples of the storage device 402 include a volatile memory, a non-volatile memory, an HDD, and an SSD. The communication device 403 communicates with the management server 300. The functions of the in-vehicle apparatus 400 are implemented by the collaboration between the processor 401 and the storage device 402. A program 405 is a computer program executed by the processor 401. The functions of the in-vehicle apparatus 400 may be implemented by the collaboration between the processor 401 that executes the program 405 and the storage device 402. The program 405 is retained in the storage device 402. Alternatively, the program 405 may be recorded on a computer-readable recording medium.

The management server 300 includes one or more processors 301 (hereinafter, simply referred to as a processor 301), one or more storage devices 302 (hereinafter, simply referred to as a storage device 302), and a communication device 303. The processor 301 executes various types of processing. Examples of the processor 301 include a general-purpose processor, a specific-purpose processor, a CPU, a GPU, an ASIC, an FPGA, an integrated circuit, a conventional circuit, and/or a combination thereof. The processor 301 can also be referred to as circuitry or processing circuitry. The storage device 302 stores (retains) various types of information. Examples of the storage device 302 include a volatile memory, a non-volatile memory, an HDD, and an SSD. The communication device 303 communicates with the in-vehicle apparatuses 400 of a large number of vehicles 10. The functions of the management server 300 are implemented by the collaboration between the processor 301 and the storage device 302. A program 305 is a computer program executed by the processor 301. The functions of the management server 300 may be implemented by the collaboration between the processor 301 that executes the program 305 and the storage device 302. The program 305 is retained in the storage device 302. Alternatively, the program 305 may be recorded on a computer-readable recording medium.

Either the processor 401 of the in-vehicle apparatus 400 or the processor 301 of the management server 300, or a combination thereof corresponds to the one or more processors 101 shown in FIG. 1. Either the storage device 402 of the in-vehicle apparatus 400 or the storage device 302 of the management server 300, or a combination thereof corresponds to the one or more storage devices 102 shown in FIG. 1. Either the program 405 of the in-vehicle apparatus 400 or the program 305 of the management server 300, or a combination thereof corresponds to the vehicle management program 105 shown in FIG. 1.

For example, the driving state acquisition unit 110, the sound source data management unit 120, the sound generation unit 130, the output unit 140, and the user interface 150 may all be provided in the in-vehicle apparatus 400. In this case, the management of the simulated sound is executed in the vehicle 10.

As another example, the sound source data management unit 120 may be provided in the management server 300. In this case, the sound source data management unit 120 manages the basic sound source data 200 used in a plurality of vehicles 10 in an integrated manner. For that purpose, the basic sound source data 200 is associated with a vehicle ID. The sound source data management unit 120 manages the available basic sound source data 200 for each vehicle ID. The sound generation unit 130 of the in-vehicle apparatus 400 downloads the available basic sound source data 200 associated with the vehicle ID from the sound source data management unit 120 of the management server 300. It is preferable to manage the basic sound source data 200 used in the vehicles 10 in an integrated manner on the management server 300, from the viewpoint of managing the basic sound source data 200.

6. Application to Battery Electric Vehicle Including Manual Mode (MT Mode)

The electric motor used as the power device for traveling in a general battery electric vehicle has torque characteristics that are significantly different from those of the internal combustion engine used as the power device for traveling in a conventional vehicle (CV). Due to the difference in the torque characteristics of the power device, the CV requires a transmission, whereas the battery electric vehicle generally does not include a transmission. Obviously, a general battery electric vehicle does not include a manual transmission (MT) that switches a gear ratio in response to a manual operation of the driver. For this reason, there is a significant difference in driving feel between driving a conventional vehicle with an MT (hereinafter, referred to as an MT vehicle) and driving a battery electric vehicle.

Meanwhile, the electric motor can relatively easily control the torque by controlling the applied voltage or field current. Therefore, in the electric motor, by performing appropriate control, the desired torque characteristics can be obtained within an operation range of the electric motor. By utilizing this feature, it is possible to control the torque of the battery electric vehicle and simulate the torque characteristics specific to the MT vehicle. In addition, the battery electric vehicle can also be provided with a pseudo shifter such that the driver can obtain a driving feel similar to that of the MT vehicle. Consequently, the MT vehicle can be simulated in the battery electric vehicle.

That is, the battery electric vehicle controls the output of the electric motor to simulate the driving characteristics (torque characteristics) specific to the MT vehicle. The driver operates the pseudo shifter to perform a pseudo manual gear shift operation. In response to the pseudo manual gear shift operation by the driver, the battery electric vehicle changes the driving characteristics (torque characteristics) to simulate the MT vehicle. Consequently, the driver of the battery electric vehicle can feel as though the driver is driving the MT vehicle. As described above, a control mode of the electric motor for simulating the driving characteristics or the manual gear shift operation of the MT vehicle will be hereinafter referred to as a "manual mode" or an "MT mode".

Hereinafter, a case where the vehicle 10 according to the present disclosure is a battery electric vehicle 10E including an MT mode will be considered. In the MT mode, the battery electric vehicle 10E may generate the pseudo engine sound corresponding to the driving operation of the driver and output the pseudo engine sound via the speaker 70. Since not solely the driving operation of the MT vehicle but also the engine sound of the MT vehicle is reproduced, the satisfaction of the driver who seeks realism is enhanced. Hereinafter, a configuration example of the battery electric vehicle 10E including the MT mode will be described. Examples of the MT mode include a "sequential shift mode" and a "three-pedal mode".

6-1. First Configuration Example (Sequential Shift Mode)

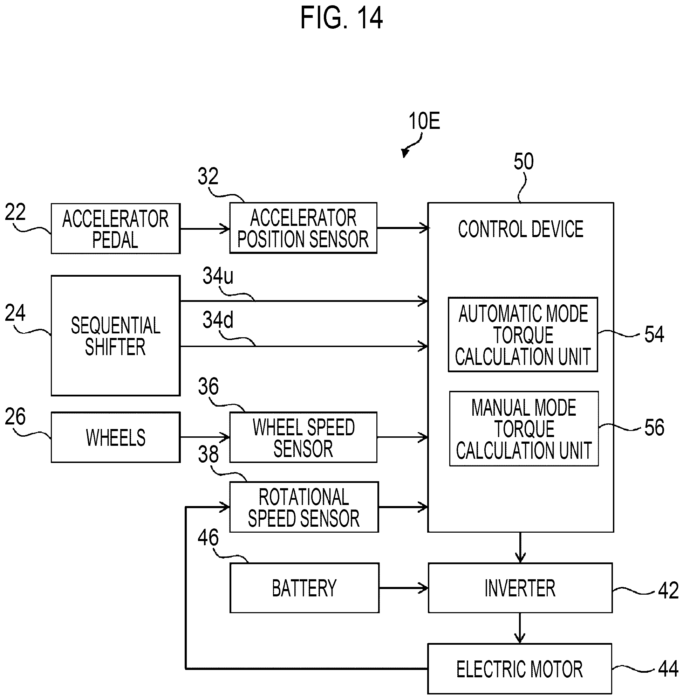

FIG. 14 is a block diagram showing a first configuration example of a power control system of the battery electric vehicle 10E according to the present embodiment. The battery electric vehicle 10E includes the electric motor 44, a battery 46, and an inverter 42. The electric motor 44 is a power device for traveling. The battery 46 accumulates electric energy for driving the electric motor 44. That is, the battery electric vehicle 10E is a battery electric vehicle (BEV) that travels with the electric energy accumulated in the battery 46. The inverter 42 converts direct current power input from the battery 46 during acceleration into driving electric power of the electric motor 44. Additionally, the inverter 42 converts regenerative electric power input from the electric motor 44 during deceleration into direct current power and charges the battery 46.

The battery electric vehicle 10E includes an accelerator pedal 22 for the driver to input an acceleration request for the battery electric vehicle 10E. An accelerator position sensor 32 for detecting an accelerator operation amount is provided on the accelerator pedal 22.

The battery electric vehicle 10E includes a sequential shifter 24. The sequential shifter 24 may be a paddle-type shifter or may be a lever-type pseudo shifter.

The paddle-type shifter is a dummy different from the original paddle-type shifter. The paddle-type shifter has a structure similar to a paddle-type shifter provided on a clutch pedal-less MT vehicle. The paddle-type shifter is attached to a steering wheel. The paddle-type shifter includes an upshift switch and a downshift switch for determining operation positions. The upshift switch issues an upshift signal 34u when pulled toward the driver, and the downshift switch issues a downshift signal 34d when pulled toward the driver.

Meanwhile, the lever-type pseudo shifter is a dummy different from the original shifter, similar to the paddle-type shifter. The lever-type pseudo shifter has a structure similar to a lever-type shifter provided on a clutch pedal-less MT vehicle. The lever-type pseudo shifter is configured to output the upshift signal 34u when the shift lever is tilted forward and to output the downshift signal 34d when the shift lever is tilted backward.

Wheels 26 of the battery electric vehicle 10E are each provided with a wheel speed sensor 36. The wheel speed sensor 36 is used as a vehicle speed sensor for detecting the vehicle speed of the battery electric vehicle 10E. In addition, the electric motor 44 is provided with a rotational speed sensor 38 for detecting the rotational speed thereof.

The battery electric vehicle 10E includes a control device 50. The control device 50 is typically an electronic control unit (ECU) mounted in the battery electric vehicle 10E. The control device 50 may be a combination of a plurality of ECUs. The control device 50 includes an interface, a memory, and a processor. An in-vehicle network is connected to the interface. The memory includes a RAM that temporarily records data and a ROM that stores a program executable by the processor and various pieces of data related to the program. The program is composed of a plurality of instructions. The processor reads and executes the program or the data from the memory, and generates a control signal based on a signal acquired from each sensor.

For example, the control device 50 controls the electric motor 44 through PWM control of the inverter 42. The control device 50 receives signals from the accelerator position sensor 32, the sequential shifter 24 (the upshift switch and the downshift switch in a case where the sequential shifter 24 is a paddle-type shifter), the wheel speed sensor 36, and the rotational speed sensor 38. The control device 50 processes these signals to calculate a motor torque command value for PWM control of the inverter 42.

The control device 50 includes an automatic mode (EV mode) and a manual mode (MT mode) as control modes. The automatic mode is a normal control mode for driving the battery electric vehicle 10E as a general electric vehicle. The automatic mode is programmed to continuously change the output of the electric motor 44 in response to the operation of the accelerator pedal 22. Meanwhile, the manual mode is a control mode for driving the battery electric vehicle 10E like the MT vehicle. The manual mode is programmed to change the output characteristics of the electric motor 44 with respect to the operation of the accelerator pedal 22 in response to an upshift operation and a downshift operation on the sequential shifter 24. The manual mode (MT mode) corresponds to the "sequential shift mode". The automatic mode and the manual mode can be switched.

The control device 50 includes an automatic mode torque calculation unit 54 and a manual mode torque calculation unit 56. Each of the units 54, 56 may be an independent ECU, or may be an ECU function obtained by executing the program recorded in the memory through the processor.

The automatic mode torque calculation unit 54 has a function of calculating a motor torque in a case where the electric motor 44 is controlled in the automatic mode. A motor torque command map is stored in the automatic mode torque calculation unit 54. The motor torque command map is a map for determining the motor torque from the accelerator operation amount and the rotational speed of the electric motor 44. The signal of the accelerator position sensor 32 and the signal of the rotational speed sensor 38 are input to each parameter of the motor torque command map. The motor torque corresponding to these signals is output from the motor torque command map. Therefore, in the automatic mode, even when the driver operates the sequential shifter 24, the operation is not reflected in the motor torque.

The manual mode torque calculation unit 56 includes an MT vehicle model. The MT vehicle model is a model for calculating the drive wheel torque that should be obtained by the operations of the accelerator pedal 22 and the sequential shifter 24 in a case where the battery electric vehicle 10E is assumed to be the MT vehicle.

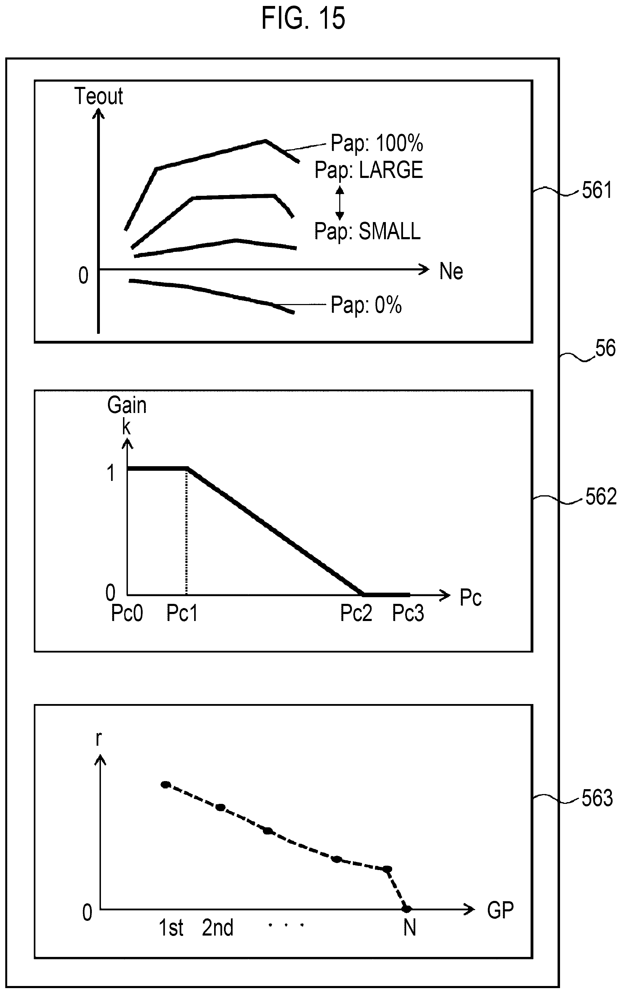

The MT vehicle model provided in the manual mode torque calculation unit 56 will be described with reference to FIG. 15. As shown in FIG. 15, the MT vehicle model includes an engine model 561, a clutch model 562, and a transmission model 563. The engine, the clutch, and the transmission that are virtually implemented by the MT vehicle model are referred to as a virtual engine, a virtual clutch, and a virtual transmission, respectively. In the engine model 561, the virtual engine is modeled. In the clutch model 562, the virtual clutch is modeled. In the transmission model 563, the virtual transmission is modeled.

The engine model 561 calculates the virtual engine rotational speed Ne and a virtual engine output torque Teout. The virtual engine rotational speed Ne is calculated based on a wheel rotational speed Nw, an overall reduction ratio R, and a slip rate Rslip of the virtual clutch. For example, the virtual engine rotational speed Ne is represented by the following Formula (1).

$$\text{Formula (1): } Ne = Nw \times R/(1 - Rslip)$$

The virtual engine output torque Teout is calculated from the virtual engine rotational speed Ne and an accelerator operation amount Pap. For the calculation of the virtual engine output torque Teout, as shown in FIG. 15, a map that defines a relationship between the accelerator operation amount Pap, the virtual engine rotational speed Ne, and the virtual engine output torque Teout is used. In this map, the virtual engine output torque Teout with respect to the virtual engine rotational speed Ne is given for each accelerator operation amount Pap. The torque characteristics shown in FIG. 15 can be set to characteristics assuming a gasoline engine or can be set to characteristics assuming a diesel engine. In addition, the torque characteristics can be set to characteristics assuming a naturally aspirated engine or can be set to characteristics assuming a turbocharged engine.

The clutch model 562 calculates a torque transmission gain k. The torque transmission gain k is a gain for calculating the degree of torque transmission of the virtual clutch corresponding to a virtual clutch operation amount Pc. The virtual clutch operation amount Pc is normally 0% and is temporarily increased to 100% in conjunction with switching of the virtual gear stage of the virtual transmission. The clutch model 562 has a map as shown in FIG. 15. In this map, the torque transmission gain k is given with respect to the virtual clutch operation amount Pc. In FIG. 15, Pc0 corresponds to a position where the virtual clutch operation amount Pc is 0%, and Pc3 corresponds to a position where the virtual clutch operation amount Pc is 100%. The range from Pc0 to Pc1 and the range from Pc2 to Pc3 are dead zones in which the torque transmission gain k does not change regardless of the virtual clutch operation amount Pc. The clutch model 562 calculates a clutch output torque Teout by using the torque transmission gain k. The clutch output torque Teout is the torque output from the virtual clutch. For example, the clutch output torque Teout is given by a product of the virtual engine output torque Teout and the torque transmission gain k (Teout = Teout × k).

Additionally, the clutch model 562 calculates the slip rate Rslip. The slip rate Rslip is used to calculate the virtual engine rotational speed Ne in the engine model 561. For the calculation of the slip rate Rslip, a map in which the slip rate Rslip is given with respect to the virtual clutch operation amount Pc can be used, similar to the torque transmission gain k.

The transmission model 563 calculates a gear ratio r. The gear ratio r is a gear ratio determined by a virtual gear stage GP in the virtual transmission. The virtual gear stage GP is upshifted by one stage in response to the upshift operation of the sequential shifter 24. On the other hand, the virtual gear stage GP is downshifted by one stage in response to the downshift operation of the sequential shifter 24. The transmission model 563 has a map as shown in FIG. 15. In this map, the gear ratio r is given with respect to the virtual gear stage GP such that the gear ratio r decreases as the virtual gear stage GP increases. The transmission model 563 calculates a transmission output torque Tgout by using the gear ratio r obtained from the map and the clutch output torque Tcout. For example, the transmission output torque Tgout is given by a product of the clutch output torque Tcout and the gear ratio r (Tgout = Tcout × r). The transmission output torque Tgout discontinuously changes in response to the switching of the gear ratio r. The change in the discontinuous transmission output torque Tgout generates a gear shift shock, thereby creating a sense of realism typical of a vehicle provided with a stepped transmission.

The MT vehicle model calculates a drive wheel torque Tw by using a predetermined reduction ratio rr. The reduction ratio rr is a fixed value determined by the mechanical structure from the virtual transmission to the drive wheels. The value obtained by multiplying the reduction ratio rr by the gear ratio r is the overall reduction ratio R. The MT vehicle model calculates the drive wheel torque Tw from the transmission output torque Tgout and the reduction ratio rr. For example, the drive wheel torque Tw is given by a product of the transmission output torque Tgout and the reduction ratio rr (Tw = Tgout × rr).

The control device 50 converts the drive wheel torque Tw calculated by the MT vehicle model into a requested motor torque Tm. The requested motor torque Tm is a motor torque needed to implement the drive wheel torque Tw calculated by the MT vehicle model. For the conversion of the drive wheel torque Tw into the requested motor torque Tm, the reduction ratio from an output shaft of the electric motor 44 to the drive wheels is used. The control device 50 controls the inverter 42 in accordance with the requested motor torque Tm to control the electric motor 44.

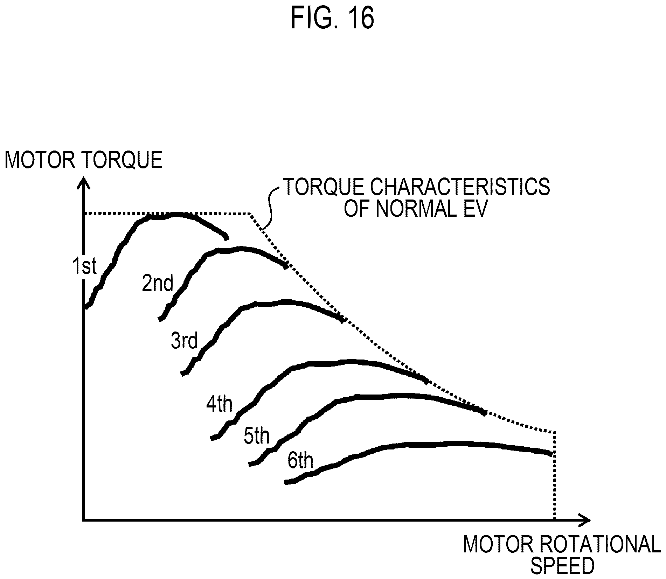

FIG. 16 is a graph showing the torque characteristics of the electric motor 44 implemented by motor control using the MT vehicle model as compared with torque characteristics of the electric motor 44 implemented by normal motor control as an electric vehicle (EV). With the motor control using the MT vehicle model, as shown in FIG. 16, the torque characteristics (solid lines in the graph) that simulate the torque characteristics of the MT vehicle can be implemented in response to the virtual gear stages set by the sequential shifter 24. In FIG. 16, the number of gear stages is six.

6-2. Second Configuration Example (Three-Pedal Mode)

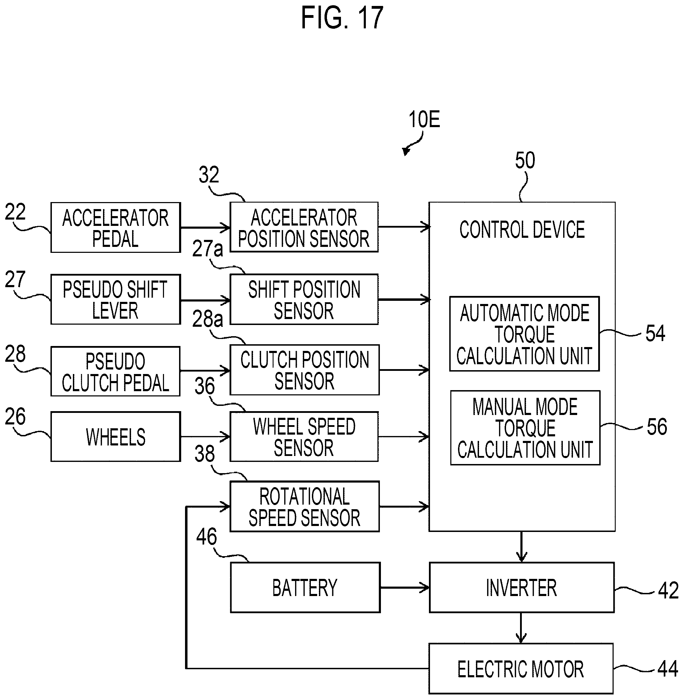

FIG. 17 is a block diagram showing a second configuration example of the power control system of the battery electric vehicle 10E according to the present embodiment. Here, solely a configuration different from the first configuration example described above will be described. Specifically, in the second configuration example, the battery electric vehicle 10E includes a pseudo shift lever (pseudo shift device) 27 and a pseudo clutch pedal 28 instead of the sequential shifter 24 provided in the first configuration example. The pseudo shift lever 27 and the pseudo clutch pedal 28 are merely dummies different from the original shift lever and clutch pedal.

The pseudo shift lever 27 has a structure that simulates a shift lever provided in the MT vehicle. The disposition and the operational feel of the pseudo shift lever 27 are the same as those of the actual MT vehicle. The pseudo shift lever 27 is provided with a position corresponding to each gear stage, for example, first gear, second gear, third gear, fourth gear, fifth gear, sixth gear, reverse, and neutral. The pseudo shift lever 27 is provided with a shift position sensor 27a that detects the gear stage by discriminating the position of the pseudo shift lever 27.

The pseudo clutch pedal 28 has a structure that simulates a clutch pedal provided in the MT vehicle. The disposition and the operational feel of the pseudo clutch pedal 28 are the same as those of the actual MT vehicle. The pseudo clutch pedal 28 is operated when the pseudo shift lever 27 is operated. That is, the driver depresses the pseudo clutch pedal 28 in a case where the driver wants to change the gear stage settings by using the pseudo shift lever 27, and when the gear stage settings have been changed, the driver releases and returns the pseudo clutch pedal 28 to the original position. The pseudo clutch pedal 28 is provided with a clutch position sensor 28a for detecting a depression amount of the pseudo clutch pedal 28.

The control device 50 receives signals from the accelerator position sensor 32, the shift position sensor 27a, the clutch position sensor 28a, the wheel speed sensor 36, and the rotational speed sensor 38. The control device 50 processes these signals to calculate a motor torque command value for PWM control of the inverter 42.

The control device 50 includes the automatic mode and the manual mode as the control modes, similar to the first configuration example described above. The automatic mode is programmed to continuously change the output of the electric motor 44 in response to the operation of the accelerator pedal 22. Meanwhile, the manual mode is a control mode for driving the battery electric vehicle 10E like the MT vehicle. The manual mode is programmed to change the output and the output characteristics of the electric motor 44 with respect to the operation of the accelerator pedal 22 in response to the operations of the pseudo clutch pedal 28 and the pseudo shift lever (pseudo shift device) 27. The manual mode (MT mode) corresponds to the "three-pedal mode". The automatic mode and the manual mode can be switched.

The vehicle model provided in the manual mode torque calculation unit 56 is the same as that shown in FIG. 15. Note that the virtual clutch operation amount Pc is replaced with the depression amount of the pseudo clutch pedal 28 detected by the clutch position sensor 28a. Additionally, the virtual gear stage GP is determined by the position of the pseudo shift lever 27 detected by the shift position sensor 27a.

## Claims

1. A vehicle management system (100) applied to a vehicle (10), the vehicle management system (100) comprising one or more processors (101), wherein the one or more processors (101) are configured to

   generate a simulated sound that simulates a sound of virtual mobility,
   output the simulated sound through a speaker (70) mounted in the vehicle (10), and
   gradually change an output level of the simulated sound over a transition period when turning ON or OFF an output of the simulated sound.

2. The vehicle management system (100) according to claim 1, wherein, in a switching period in which the simulated sound output from the speaker (70) is switched from a first simulated sound to a second simulated sound, the one or more processors (101) are configured to gradually decrease an output level of the first simulated sound and gradually increase an output level of the second simulated sound.

3. The vehicle management system (100) according to claim 2, wherein the switching period includes

   a first transition period in which the output level of the first simulated sound gradually decreases to zero, and
   a second transition period in which the output level of the second simulated sound gradually increases from zero.

4. The vehicle management system (100) according to claim 3, wherein the first transition period and the second transition period at least partially overlap.

5. The vehicle management system (100) according to claim 4, wherein the first transition period and the second transition period coincide with each other.

6. The vehicle management system (100) according to claim 5, wherein the one or more processors (101) are configured to gradually change the output level of the first simulated sound and the output level of the second simulated sound such that an output level of a combined sound of the first simulated sound and the second simulated sound is constant over the switching period.

7. The vehicle management system (100) according to claim 3, wherein the second transition period follows the first transition period and does not overlap with the first transition period.

8. The vehicle management system (100) according to claim 2, wherein the one or more processors (101) are configured to gradually change the output level of the first simulated sound and the output level of the second simulated sound such that a combined sound of the first simulated sound and the second simulated sound is output from the speaker (70) during at least a part of the switching period.

9. The vehicle management system (100) according to claim 8, wherein the one or more processors (101) are configured to gradually change the output level of the first simulated sound and the output level of the second simulated sound such that an output level of the combined sound is constant over the switching period.

10. The vehicle management system (100) according to any one of claims 1 to 9, wherein:

    the vehicle (10) is a battery electric vehicle (10E) that uses an electric motor (44) as a power device for traveling; and
    the battery electric vehicle (10E) includes a simulation mode in which the virtual mobility is simulated in the vehicle (10).

11. The vehicle management system (100) according to claim 10, wherein:

    the virtual mobility is an engine vehicle; and
    the simulated sound is a pseudo engine sound that simulates an engine sound of the engine vehicle.

12. The vehicle management system (100) according to claim 10, wherein:

    the virtual mobility is a manual transmission vehicle; and
    the simulation mode includes a manual mode in which driving characteristics of the manual transmission vehicle are simulated.

**13.** The vehicle management system (100) according to claim 12, wherein:

the battery electric vehicle (10E) includes an accelerator pedal (22) and a sequential shifter (24); and
in the manual mode, the battery electric vehicle (10E) is configured to change output characteristics of the electric motor (44) with respect to an operation of the accelerator pedal (22) in response to a shift operation of the sequential shifter (24).

**14.** The vehicle management system (100) according to claim 12, wherein:

the battery electric vehicle (10E) includes an accelerator pedal (22), a pseudo clutch pedal (28), and a pseudo shift device;
the pseudo clutch pedal (28) is configured to operate when the pseudo shift device is operated; and
in the manual mode, the battery electric vehicle (10E) is configured to change an output of the electric motor (44) with respect to an operation of the accelerator pedal (22) in response to an operation of the pseudo clutch pedal (28) and an operation of the pseudo shift device.

**15.** A battery electric vehicle (10E) that uses an electric motor (44) as a power device for traveling, the battery electric vehicle (10E) comprising one or more processors (401),

wherein the one or more processors (401) are configured to
generate a simulated sound that simulates a sound of virtual mobility,
output the simulated sound through a speaker (70) mounted in the battery electric vehicle (10E), and
gradually change an output level of the simulated sound over a transition period when turning ON or OFF an output of the simulated sound.

# FIG. 1

# FIG. 2

100

VEHICLE MANAGEMENT SYSTEM

<SIMULATION MODE>
SIMULATION OF VIRTUAL MOBILITY
(1) SIMULATION OF DRIVING
    CHARACTERISTICS
(2) SIMULATION OF SOUND
    (GENERATION AND OUTPUT
    OF SIMULATED SOUND)

10

70

11

SENSORS

44

ELECTRIC
MOTOR

FIG. 3

EP 4 600 949 A1

# FIG. 4

# FIG. 5

DEFAULT
LEVEL

TIME

OUTPUT
COEFFICIENT

α

| ON | | OFF |

1

0

TIME

TRANSITION
PERIOD
TRN

TRANSITION
PERIOD
TRN

OUTPUT
LEVEL

0

TIME

# FIG. 6

# FIG. 7

# FIG. 8

# FIG. 9

$$\alpha 1: \sqrt{1 - ((T - T0)/dT)} \quad [T0 < T < T0 + dT]$$

$$\alpha 2: \sqrt{(T - T0)/dT} \quad [T0 < T < T0 + dT]$$

# FIG. 10

OUTPUT
COEFFICIENT
α

SW = TRN1 = TRN2

1

α1

α2

0

T0

dT

TIME

α1: cos $((T - T0)/dT \times \pi/2)$  $[T0 < T < T0 + dT]$

α2: cos $(1 - ((T - T0)/dT \times \pi/2))$  $[T0 < T < T0 + dT]$

# FIG. 11

# FIG. 12

# FIG. 13

IN-VEHICLE APPARATUS 400

- 401 PROCESSOR
- 402 STORAGE DEVICE
- 403 COMMUNICATION DEVICE
- 405 PROGRAM

MANAGEMENT SERVER 300

- 301 PROCESSOR
- 302 STORAGE DEVICE
- 303 COMMUNICATION DEVICE
- 305 PROGRAM

EP 4 600 949 A1

# FIG. 14

10E

| | |
|---|---|
| 22 — ACCELERATOR PEDAL | 32 — ACCELERATOR POSITION SENSOR |

50 — CONTROL DEVICE

24 — SEQUENTIAL SHIFTER

34u

34d

AUTOMATIC MODE TORQUE CALCULATION UNIT — 54

MANUAL MODE TORQUE CALCULATION UNIT — 56

26 — WHEELS

36 — WHEEL SPEED SENSOR

38 — ROTATIONAL SPEED SENSOR

46 — BATTERY

INVERTER — 42

ELECTRIC MOTOR — 44

# FIG. 15

FIG. 16

MOTOR TORQUE

TORQUE CHARACTERISTICS
OF NORMAL EV

1st

2nd

3rd

4th

5th

6th

MOTOR ROTATIONAL
SPEED

# FIG. 17

Europäisches
Patentamt

European
Patent Office

Office européen
des brevets

# EUROPEAN SEARCH REPORT

Application Number

EP 24 22 3397

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/118708 A1 (LEE DONG CHUL [KR] ET AL) 25 April 2019 (2019-04-25) | 1-11,15 | INV. G10K15/02 |
| Y | * claim 6 *<br>* figures 2, 5 *<br>* paragraph [0009] *<br>* paragraph [0034] - paragraph [0037] *<br>* paragraph [0047] *<br>* paragraph [0054] - paragraph [0056] *<br>* paragraph [0061] * | 12-14 | |
| X | KR 102 232 205 B1 (UNIV KOOKMIN IND ACAD COOP FOUND [KR]) 25 March 2021 (2021-03-25)<br>* figures 1, 4b *<br>* paragraph [0001] - paragraph [0016] *<br>* paragraph [0023] - paragraph [0024] *<br>* paragraph [0097] * | 1,10,11, 15 | |
| Y | JP 2022 030862 A (TOYOTA MOTOR CORP) 18 February 2022 (2022-02-18)<br>* figures 1-8, 11 *<br>* paragraph [0025] - paragraph [0029] *<br>* paragraph [0048] - paragraph [0049] *<br>* paragraph [0058] - paragraph [0064] * | 12-14 | |
| A | CN 104 859 533 A (BAYERISCHE MOTOREN WERKE AG) 26 August 2015 (2015-08-26)<br>* the whole document * | 1-14 | **TECHNICAL FIELDS SEARCHED (IPC)**<br><br>G10K |

The present search report has been drawn up for all claims

| Place of search | Date of completion of the search | Examiner |
|---|---|---|
| The Hague | 26 May 2025 | Lameloise, C |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 22 3397

This annex lists the patent family members relating to the patent documents cited in the above-mentioned European search report.
The members are as contained in the European Patent Office EDP file on
The European Patent Office is in no way liable for these particulars which are merely given for the purpose of information.

26-05-2025

| Patent document cited in search report | Publication date | Patent family member(s) | Publication date |
|---|---|---|---|
| US 2019118708 A1 | 25-04-2019 | CN 109693609 A | 30-04-2019 |
| | | DE 102017221910 A1 | 25-04-2019 |
| | | KR 20190044292 A | 30-04-2019 |
| | | US 2019118708 A1 | 25-04-2019 |
| KR 102232205 B1 | 25-03-2021 | NONE | |
| JP 2022030862 A | 18-02-2022 | CN 114056117 A | 18-02-2022 |
| | | JP 7298566 B2 | 27-06-2023 |
| | | JP 2022030862 A | 18-02-2022 |
| | | US 2022041070 A1 | 10-02-2022 |
| | | US 2024278654 A1 | 22-08-2024 |
| | | US 2024278655 A1 | 22-08-2024 |
| | | US 2024278656 A1 | 22-08-2024 |
| CN 104859533 A | 26-08-2015 | CN 104859533 A | 26-08-2015 |
| | | DE 102014203401 A1 | 27-08-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011215437 A